# EUROPÄISCHE PATENTANMELDUNG

(11) **EP 1 985 996 A1**
(43) Veröffentlichungstag der Anmeldung: **29.10.2008**
(21) Anmeldenummer: 07008615.2
(22) Anmeldetag: 27.04.2007
(51) Int. Cl.: G01N 21/86

(54) **Analysesystem zur photometrischen Bestimmung eines Analyten in einer Körperflüssigkeit mit einem Analysegerät und einem Testträger zur Aufnahme in das Analysegerät**

(71) Anmelder: Roche Diagnostics GmbH, 68305 Mannheim (DE); F.HOFFMANN-LA ROCHE AG, 4070 Basel (CH)
(72) Erfinder: Porsch,Ulrich, 69469 Weinheim (DE); Lorenz,Robert, 67547 Worms (DE)
(74) Vertreter: Petirsch, Markus

(57) **Zusammenfassung**

Ein Analysesystem zur photometrischen Bestimmung eines Analyten in einer Körperflüssigkeit weist ein Analysegerät (2) und einen Testträger (3) auf. Der Testträger (3) hat eine Auswertezone (4), in der als Folge einer Reaktion einer mit dem Testträger (3) kontaktierten Probe der Körperflüssigkeit mit einem in dem Testträger (3) enthaltenen Reagenz eine photometrisch nachweisbare Änderung stattfindet. Das Analysegerät (2) umfasst einen optischen Sender (5) zur Emission von Licht auf die Auswertezone (4) des Testträgers (3), einen optischen Empfänger (7) zum Empfang von Licht von der Auswertezone (4) und zum Erzeugen eines dem empfangenen Licht entsprechenden Messsignals und eine Mess- und Auswerteeinrichtung (8) mit einer Messeinheit (9) und einer Auswerteeinheit (10). In der Messeinheit (9) wird das von dem Empfänger erzeugte Messsignal verstärkt und digitalisiert. In der Auswerteeinheit (10) wird aus dem digitalisierten Messsignal der gesuchte Konzentrationswert mittels eines Auswertealgorithmus, der eine Zuordnung zwischen Werten des Messsignals und Konzentrationswerten umfasst, ermittelt, wobei in dem Auswerteaigorithmus mindestens ein Rechenschritt mittels eines Prozessors ausgeführt wird. In der Auswerteeinheit (10) wird an einem Erfassungspunkt im Verarbeitungsablauf hinter der Ausführung des Rechenschrittes ein Kontrollwert einer Kontrollgröße erfasst. Der Kontrollwert wird mittels eines Kontrollalgorithmus überprüft, in dem eine Abweichung des ermittelten Kontrollwerts von einem Erwartungswert bestimmt wird .Ein Fehler der Mess- und Auswerteeinrichtung (8) wird erkannt, wenn die Abweichung des Kontrollwertes von dem Erwartungswert einen vordefinierten Grenzwert übersteigt

## Beschreibung

Die vorliegende Erfindung betrifft ein Analysesystem zur photometrischen Bestimmung der Konzentration eines Analyten in einer Körperflüssigkeit mit einem Analysegerät und einem Testträger. Der Testträger weist eine Aufnahmezone auf, in der als Folge einer Reaktion eines mit dem Testträger kontaktierten Probe der Körperflüssigkeit mit einem in dem Testträger enthaltenen Reagenz eine photometrisch nachweisbare Änderung stattfindet.

Analysesysteme zur photometrischen Bestimmung eines Analyten in einer Körperflüssigkeit, die disposible Testelemente, Testträger oder Teststreifen verwenden, sind bekannt. Sie werden eingesetzt, um die Konzentration verschiedener Analyten, wie beispielsweise Glucose oder Cholesterin im Blut zu ermitteln. Die Testträger haben meist die Form von Teststreifen, jedoch sind auch andere Formen von Testelementen, beispielsweise flache, näherungsweise quadratische Plättchen, gebräuchlich.

In der Regel enthalten die Testträger Reagenzien, deren Reaktion mit der Probe zu einer detektierbaren Veränderung führt, die mit einer zum System gehörenden Mess- und Auswerteeinrichtung gemessen wird.

Gebräuchlich sind insbesondere photometrische Analysesysteme, bei denen die Reaktion eine Farbänderung in einer Nachweisschicht des Testelementes verursacht, die photometrisch gemessen wird. Hierbei wird in der Regel die Intensität des von dem Testträger reflektierten Lichtes untersucht.

Bei sachgemäßer Anwendung arbeiten die photometrischen Analysesysteme in der Regel zuverlässig. Wird die erforderliche Sorgfalt bei der Verwendung der Geräte oder der Testträger bzw. Teststreifen vom Benutzer jedoch nicht aufgebracht, können fehlerhafte Messwerte resultieren.

Trotzdem kann es auch bei sachgemäßer Anwendung zu fehlerhaften Messergebnissen kommen, insbesondere wenn Fabrikationsfehler beim Analysegerät oder beim Testträger vorliegen. Obwohl große Sorgfalt bei der Herstellung solcher Analysegeräte und Teststreifen verwendet wird, besteht das Bedürfnis, Fehlfunktionen des Messgerätes zu ermitteln, um fehlerhafte Analysewerte zu vermeiden. Da beispielsweise bei der Ermittlung der Konzentration des Glucosegehaltes das Messergebnis zur Therapie eines Patienten verwendet wird, insbesondere die Dosierung des Insulins bestimmt, ist ein fehlerfreier Analysewert besonders wichtig. Eine auf einem fehlerhaften Messergebnis basierende falsche Zugabe von Insulin (zu geringe oder zu hohe Insulinzugabe) kann zu körper- und lebensbedrohlichen Situationen führen.

Fehlerhafte Messergebnisse lassen sich gelegentlich auf einen Fehler im Microcontroller des Analysegerätes zurückführen. Deshalb sind viele Geräte redundant ausgebildet und umfassen zwei parallel arbeitende Mikrocontroller. Der Einsatz eines zweiten Mikrocontrollers (Hardware) vergrößert nicht nur den Platzbedarf im Analysegerät, er macht dieses auch teurer. Darüber hinaus müssen Prozeduren für die parallele Verarbeitung der Messsignale geschaffen werden.

Wird die Mess- und Auswerteeinrichtung in Form von Software implementiert, so kann die Redundanz durch ein zweites Software-Modul geschaffen werden. Der Verarbeitungsaufwand ist jedoch größer, da zwei parallel ablaufende Programme abgearbeitet werden müssen. Zudem ist die Programmierung aufwendig. Die Ermittlung des Analyseergebnisses dauert durch die Parallelverarbeitung länger.

Es ist Aufgabe der Erfindung, ein Analysesystem zur photometrischen Bestimmung eines Analyten in einer Körperflüssigkeit bereitzustellen, das eine einfache Überprüfung der Mess- und Auswerteeinrichtung ermöglicht.

Die Aufgabe wird erfindungsgemäß durch ein Analysesystem mit den Merkmalen des Anspruchs 1 und durch ein Analysesystem mit den Merkmalen des Anspruchs 10 gelöst. Die Unteransprüche definieren bevorzugte Ausführungsformen des erfindungsgemäßen Analysesystems.

Das erfindungsgemäße Analysesystem zur photometrischen Bestimmung eines Analyten in einer Körperflüssigkeit umfasst ein Analysegerät und einen Testträger. Der Testträger weist eine Auswertezone auf, in der als Folge einer Reaktion einer mit dem Testträger kontaktierten Probe der Körperflüssigkeit, mit einem Reagenz, das in dem Testträger enthalten ist, eine photometrisch nachweisbare Änderung stattfindet.

Das Analysegerät schließt einen optischen Sender zur Emission von Licht auf die Auswertezone des Testträgers, einen optischen Empfänger ein, um Licht zu detektieren, das von der Auswertezone empfangen wird, und um ein dem empfangenen Licht entsprechendes Messsignal zu erzeugen. Das Licht von der Auswertezone kann entweder an der Auswertezone (diffus) reflektiert werden oder durch die Auswertezone transmittieren, bevor es den optischen Empfänger erreicht. Das von dem Empfänger erzeugte Messsignal entspricht der Intensität des empfangenen Lichts. Das Analysegerät umfasst eine Mess- und Auswerteeinrichtung mit einer Messeinheit und einer Auswerteeinheit.

In der Messeinheit wird das in dem optischen Empfänger empfangene Messsignal verstärkt und digitalisiert. Aus dem digitalisierten Messsignal wird in der Auswerteeinheit der gesuchte Konzentrationswert mittels eines Auswertealgorithmus ermittelt, der eine Zuordnung zwischen Werten des Messsignals und Konzentrationswerten umfasst. Die Zuordnung zwischen den Werten des Messsignals und den Konzentrationswerten kann als Formel, Funktion oder als Tabelle hinterlegt sein.

Im Rahmen der Erfindung wurde festgestellt, dass die Analysegeräte teilweise fehlerhafte Messergebnisse ausgeben, die jedoch nicht auf einen systematischen Fehler schließen lassen. Der auftretende Fehler tritt sporadisch auf und ist beispielsweise von Umwelteinflüssen abhängig, d.h. abhängig von der Umgebungstemperatur oder den Umgebungsbedingungen, wie Feuchte oder Luftdruck. Auch wurde festgestellt, dass die in Form eines Mikrocomputers ausgebildete Mess- und Auswerteeinrichtung der Analysegeräte in Abhängigkeit der zu verarbeitenden Werte, also der am Eingang anliegenden Messsignale, fehlerhafte Ergebnisse liefern kann. Scheinbar ergibt sich ein zeitliches Auftreten eines Fehlers.

Ein derartiger Fehler lässt sich auf einfache Weise detektieren, wenn ein Kontrollwert, der im Verarbeitungsablauf hinter der Ausführung eines Rechenschrittes zur Ermittlung des Messergebnisses erfasst wird, mittels eines Erwartungswertes verglichen wird. Der Verarbeitungsablauf umfasst wenigstens einen Rechenschritt eines Prozessors oder Mikrocomputers. Er kann darüber hinaus auch weitere Verfahrens- und/oder Rechenschritte einschließen, um aus den Werten des Messsignals das gesuchte Messergebnis zu ermitteln, beispielsweise einen Konzentrationswert oder einen eine Konzentration repräsentierenden Wert. Das Messergebnis könnte auch ein "Zwischenwert" sein, der im Prozessor zur Weiterverarbeitung verwendet wird.

Der Kontrollwert wird erfindungsgemäß mittels eines Kontrollalgorithmus überprüft, in dem eine Abweichung des ermittelten Kontrollwertes von einem Erwartungswert bestimmt wird. Übersteigt diese Abweichung einen vordefinierten Grenzwert, wird ein Fehler in der Mess- und Auswerteeinrichtung erkannt. An dieser Stelle wird zusätzliches Wissen über den Wert der Kontrollgröße in dem erfindungsgemäßen System implementiert. Es ist in etwa bekannt, welches Verhalten der Kontrollwert aufweist bzw. in welchen groben Bereichen der Kontrollwert liegen muss. Dies kann durch Messreihen im Labor oder mittels Referenzsystemen bestimmt werden, die redundant aufgebaute Mess- und Auswerteeinrichtungen aufweisen.

Im Rahmen der Erfindung wird der Kontrollwert als ein Wert während der Verarbeitung des Messsignals zur Ermittlung des Messergebnisses bzw. des gesuchten Konzentrationswerts verstanden. Besonders bevorzugt ist der Kontrollwert der gesuchte Konzentrationswert selbst, so dass die Überprüfung der Mess- und Auswerteeinrichtung am Ende der Bestimmung des Konzentrationswertes stattfindet. Der Kontrollwert kann aber auch aus anderen "Zwischenwerten" während der Verarbeitung des Messwertes gebildet werden, beispielsweise aus prozessorinternen Rechengrößen, die die Konzentration repräsentieren, oder aus verarbeiteten Remmissionswerten (Intensität des von dem Testträger reflektierten Lichts).

Die Kontrollgröße wird an einem Erfassungspunkt erfasst. Dieser Erfassungspunkt ist eine Stelle im Verarbeitungsablauf innerhalb des Prozessors, wenn bereits wenigstens ein Rechenschritt zur Ermittlung des Konzentrationswertes ausgeführt worden ist. Der Erfassungspunkt liegt also in Bezug auf den Verarbeitungsablauf hinter mindestens einem Rechenschritt (downstream). Er kann z.B. ein Ort in der Mess- und Auswerteeinrichtung bzw. in dem Mikrocomputer sein oder auch eine Ablaufstelle in einem Computerprogramm, wenn die Mess- und Auswerteeinrichtung in Form von Software in einem Mikrocomputer, z.B. in einem ASIC, implementiert ist.

Im Folgenden wird ohne Einschränkung der Allgemeinheit der Kontrollwert als Konzentrationswert beschrieben. Selbstverständlich kann anstelle des Konzentrationswertes auch jeder andere geeignete Wert als Kontrollwert verwendet werden. Ebenfalls ohne Einschränkung der Allgemeinheit wird ein Referenzkonzentrationswert als Erwartungswert verwendet. Der Erwartungswert und der Kontrollwert sind in der Regel derart aufeinander abgestimmt, dass der Kontrollwert und der Erwartungswert die gleiche Größe betreffen. Mit anderen Worten: Ist beispielsweise der Kontrollwert ein Wert der Konzentration, dann ist auch der Erwartungswert ein Wert der Konzentration.

Der Konzentrationswert wird erfindungsgemäß mittels eines Kontrollalgorithmus überprüft, in dem eine Abweichung des ermittelten Konzentrationswertes von einem Erwartungswert bestimmt wird, der bevorzugt ein Referenzkonzentrationswert sein kann, welcher in Abhängigkeit des zu messenden Analyten, des Testträgers oder des Bestimmungsverfahrens zur Ermittlung des Konzentrationswertes parametrisiert sein kann. Hierbei kann allgemeines Wissen über den Konzentrationswert implementiert sein. Wenn die Abweichung des Konzentrationswertes von dem Referenzkonzentrationswert einen vordefinierten Grenzwert übersteigt, wird ein Fehler in der Mess- und Auswerteeinrichtung erkannt.

Durch die Verwendung eines Referenzwertes und eines einfach und genauen zu parametrisierenden Grenzwertes kann der mit der Mess-und Auswerteeinrichtung ermittelte Konzentrationswert schnell und zuverlässig überprüft werden.

Zur Überprüfung des Konzentrationswertes ist keine zweite exakte Ermittlung des Konzentrationswertes, beispielsweise mit einem redundanten System, notwendig. Vielmehr reicht eine Überprüfung des Konzentrationswertes aus. Hierbei wird der ermittelte Konzentrationswert mit einem Referenzkonzentrationswert verglichen. Dazu wird eine Referenzzuordnung eingesetzt, die in dem Kontrollalgorithmus verwendet wird. Einer Mehrzahl von Referenzmesswerten wird mittels der Referenzzuordnung eine Mehrzahl von Referenzkonzentrationswerten zugeordnet. Zur Überprüfung eines aus dem aktuellen Messwert des Messsignals ermittelten Konzentrationswertes wird zunächst der Referenzwert ausgewählt, der dem aktuellen Messwert des Messsignals benachbart ist. Aus diesem Referenzwert wird mittels der Referenzzuordnung der entsprechende Referenzkonzentrationswert bestimmt. Der ausgewählte Referenzkonzentrationswert wird mit dem ermittelten Konzentrationswert verglichen, wobei die Abweichung einen vorbestimmten Grenzwert nicht übersteigen darf. Der vordefinierte Grenzwert kann auf einfache Weise parametrisiert werden.

Der Auswertealgorithmus zur Ermittlung des gesuchten Konzentrationswertes aus dem digitalisierten Messsignal ist bevorzugt chargenspezifisch. Als Auswertealgorithmus wird dabei die Gesamtheit aus hinterlegter Funktion bzw. Relation und der in einer solchen Funktion definierten Variablen verstanden, die veränderliche Parameter sein können. Insbesondere können die Variablen der Zuordnung zwischen den Werten des Messsignals und den Konzentrationswerten, die in dem Auswertealgorithmus umfasst sind, abhängig sein von den verwendeten Testträgern. Die zur Bestimmung des Konzentrationswertes verwendete Zuordnung zwischen den Messwerten des Messsignals und den Konzentrationswerten ist bevorzugt chargenspezifisch für die Produktionscharge der verwendeten Testträger. Vor der ersten Verwendung eines Testträgers einer neuen Produktionscharge werden deshalb Informationen über die chargenspezifische Zuordnung in das Analysegerät eingespielt und in einem Speicher des Analysegerätes abgespeichert.

Bevorzugt ist auch die Referenzenzuordnung produktionschargenspezifisch, so dass die Referenzzuordnung ebenfalls vor der ersten Verwendung eines Testträgers einer neuen Produktionscharge in dem Analysegerät abgespeichert werden muss. Die Referenzzuordnung kann entweder in das Analysegerät eingespielt werden, d.h. mittels eines Datenträgers oder über eine Schnittstelle von extern übertragen werden. Die Referenzzuordnung wird dann in einem anderen Gerät erzeugt und in einem Speicher des Analysegerätes abgespeichert.

Alternativ kann besonders bevorzugt die Referenzzuordnung in dem Analysegerät selbst erzeugt werden. Sie wird mittels des Auswertealgorithmus mit vorbestimmten Referenzmesswerten erzeugt, wobei jedem Referenzmesswert ein Referenzkonzentrationswert durch Anwendung der in dem Auswertealgorithmus hinterlegten Zuordnung zugeordnet wird. Die erzeugte Referenzzuordnung wird dann in dem Analysegerät abgespeichert. Beispielsweise kann die Referenzzuordnung in Form einer "Look-Up-Tabelle" oder in einer anderen Tabellenform als Wertepaaren abgelegt werden. Bevorzugt werden in der Referenzzuordnung wenigstens zehn, besonders bevorzugt wenigstens dreißig Wertepaare abgelegt. Im Rahmen der Erfindung haben sich ca. fünfzig Wertepaare als besonders geeignet erwiesen. Je mehr Wertepaare hinterlegt werden, desto genauer kann die Überprüfung des ermittelten Konzentrationswertes sein.

Die Abspeicherung und/oder das Erzeugen der Referenzzuordnung muss vor der ersten Verwendung eines Testträgers einer neuen Produktionscharge geschehen, da auch die Referenzzuordnung produktionschargenabhängig ist und für Testträger aus unterschiedlichen Produktionschargen ebenso wie die Zuordnung des Auswertealgorithmus abweichen kann.

Wird die Referenzzuordnung des Kontrollalgorithmus in dem Analysegerät durch Anwendung der Zuordnung des Auswertealgorithmus erstellt, so kann die Referenzzuordnung zusätzlich überprüft werden. Bevorzugt werden die ermittelten Referenzkonzentrationswerte auf mathematische Monotonie überprüft, d.h. darauf überprüft, ob die Referenzkonzentrationswerte eine Funktion bzw. eine Folge mit einer gleichsinnigen Steigung beschreiben. Dazu wird erfindungsgemäß das Wissen über die Konzentrationswerte in Abhängigkeit des emittierten Lichts, also des Messsignals, verwendet. Für steigende Messwerte des Messsignals, also für eine ansteigende Intensität des emittierten Lichtsignals, ist bekannt, dass die Konzentration monoton fällt. Deshalb müssen auch die Referenzkonzentrationswerte mit steigenden Referenzmesswerten fallen. Selbstverständlich ist auch eine Überprüfung von monoton steigenden Konzentrationen möglich. Photometrische Verfahren, die auf Lumineszenz beruhen, weisen bei steigenden Messwerten ebenfalls steigende Konzentrationswerte auf. Hier müssen auch die Referenzkonzentrationswerte mit steigenden Referenzmesswerten steigen.

Die durch Anwendung der Zuordnung des Auswertealgorithmus erzeugte Referenzzuordnung kann optional auf "Glattheit" überprüft werden. Die Abweichungen zwischen zwei aufeinander folgenden Referenzkonzentrationswerten dürfen nicht zu groß sein, insbesondere eine vorgegebene parametrisierbare Toleranz nicht überschreiten, die in einem Speicher des Analysegerätes hinterlegt sein können.

Andernfalls wird ein Fehler der Mess- und Auswerteeinrichtung erkannt. Es kann nun entweder ein Fehler ausgegeben werden oder die Ermittlung der Referenzzuordnung wiederholt werden. Bei der Wiederholung der Ermittlung der Referenzzuordnung können abweichende Referenzmesswerte verwendet werden.

Die Mess- und Auswerteeinrichtung kann auch dadurch überprüft werden, dass in der Messeinheit zu einer Mehrzahl von Messzeitpunkten eine Mehrzahl von aufeinanderfolgenden Hilfsmesswerten des Messsignals erfasst werden. Die aufeinanderfolgenden Hilfsmesswerte werden in der Mess- und Auswerteeinrichtung mit den jeweils vorrausgehenden Hilfsmesswerten verglichen. Damit wird überprüft, ob die Hilfsmesswerte eine mathematisch monotone Funktion oder Folge bilden. Die Hilfsmesswerte müssen also alle eine gleichsinnige Steigung haben. Ist dies nicht der Fall wird ein Fehler der Mess- und Auswerteeinrichtung erkannt. Dem Fachmann ist klar, dass diese Überprüfung alternativ und/oder zusätzlich zur Überprüfung der Abweichung des Kontrollwertes von dem Erwartungswert durchgeführt werden kann.

Die Erfindung wird nachfolgend anhand der Figuren näher erläutert. Die in der bevorzugten Ausführungsform dargestellten Besonderheiten können einzeln oder in Kombination verwendet werden, um bevorzugte Ausgestaltungen der Erfindung zu schaffen. Die beschriebene Ausführungsform stellt keine Einschränkung der Allgemeinheit des in den Ansprüchen definierten Gegenstandes dar. Es zeigen:
- Fig. 1: ein Prinzipschaltbild eines Analysesystems mit einem Analysegerät und einem Testträger;
- Fig. 2: den zeitlichen Verlauf des von dem optischen Empfänger des Analysegerätes empfangenen Lichts über die Zeit;
- Fig. 3: eine Zuordnung zwischen den Messwerten eines Messsignals und den Konzentrationswerten für einen Testträger;
- Fig. 4a,b: unterschiedliche Darstellungen einer Referenzzuordnung des Analysegeräts.

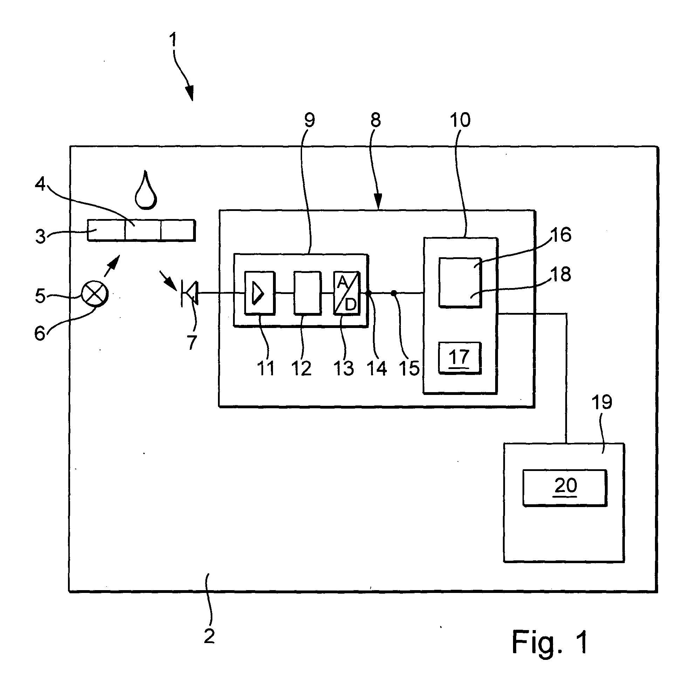

Figur 1 zeigt ein Analysesystem 1 mit einem Analysegerät 2 und einem Testträger 3, der als Teststreifen ausgebildet ist und eine Auswertezone 4 aufweist. In der Auswertezone 4 ist ein Reagenz enthalten, das bei Vorhandensein eines Analyten in einer Körperflüssigkeit, die auf die Auswertezone 4 aufgebracht wird, eine Reaktion hervorruft, deren Änderung photometrisch nachweisbar ist.

Die Auswertezone 4 des Testträgers 3 wird von einem optischen Sender 5 mit Licht bestrahlt. Der Sender 5 ist als Lichtquelle 6 ausgebildet, insbesondere als Licht emittierende Diode. Selbstverständlich können auch mehrere beliebige Lichtquellen vorhanden sein, die parallel oder seriell geschaltet sind. Das von dem Testträger 3 abgestrahlte Licht wird von einem optischen Empfänger 7 empfangen. Der Empfänger 7 ist ein Lichtsensor, insbesondere eine Fotodiode 8. Das von dem Testträger 3 reflektierte Licht wird als Remission bezeichnet. Dabei wird die Intensität des reflektierten Lichts gemessen und in ein entsprechendes Messsignal umgewandelt.

Das der Intensität des empfangenen Lichts entsprechende Messsignal wird an eine Mess- und Auswerteeinrichtung 8 weitergeleitet, die eine Messeinheit 9 und eine Auswerteeinheit 10 umfasst. Die Messeinheit 9 schließt einen Verstärker 11, eine Messschaltung 12, die als Bandfilter oder ähnliches ausgebildet ist, und einen A-/D-Wandler ein. An einem Ausgang 14 der Messeinheit 9 steht dann ein digitalisiertes Messsignal 15 zur Verfügung, das als Remission bezeichnet wird.

Das digitalisierte Messsignal 15 wird von der Auswerteeinheit 10 verarbeitet. Die Auswerteeinheit 10 schließt einen Microcontroller 16 und einen Speicher 17 ein. In dem Microcontroller 16 ist eine Zuordnung 18 implementiert, mittels der aus dem Messsignal 15 ein Konzentrationswert ermittelt wird. Der Konzentrationswert wird auf seine Korrektheit überprüft, indem er mit einem Referenzkonzentrationswert verglichen und die Abweichung zu dem Referenzkonzentrationswert bestimmt wird. Überschreitet die Abweichung einen vorgegebenen Grenzwert, so wird ein Fehler erkannt.

Der erkannte Fehler wird an eine Anzeigeeinheit 19 übertragen und beispielsweise auf einem Display 20 angezeigt. Ist der ermittelte Konzentrationswert korrekt, d.h. ist die Abweichung kleiner als der Grenzwert, so wird auf dem Display 20 der ermittelte Konzentrationswert angezeigt.

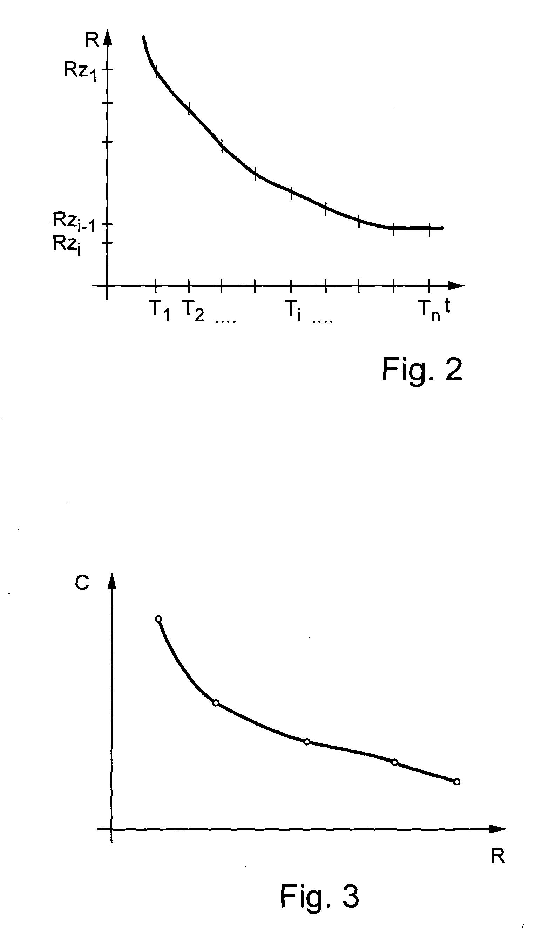

Figur 2 zeigt den zeitlichen Verlauf der von dem Empfänger 7 empfangenen Remission (Intensität des von dem Testträger 3 reflektierten Lichts). Selbstverständlich kann auch vom Testträger 3 transmittiertes Licht als Grundlage für die Konzentrationsermittlung verwendet werden. Die Remission ist das Messsignal, das von der Messeinheit 9 verarbeitet wird. Erfindungsgemäß kann das von der Messeinheit 9 digitalisierte Messsignal 15 überprüft werden. Dabei wird das bekannte Wissen über den zeitlichen Verlauf der Remission zugrundegelegt, der durch eine monoton fallende Kurve beschrieben werden kann. Zur Überprüfung des Messsignals werden zu einer Mehrzahl von Messzeitpunkten T₁, T₂, ... Tₙ eine Mehrzahl von Hilfsmesswerten des Messsignals ermittelt, die in dieser Ausführungsform als Zwischenmesswerte bzw. Zwischenremissionswerte, Rz₁, Rz₂ ... Rzₙ bezeichnet werden. Die Hilfsmesswerte müssen nicht zwingend Werte sein, die zeitlich vor dem Messwert liegen, der für die Ermittlung des Messergebnisses verwendet wird. Die aufeinanderfolgenden Zwischenmesswerte Rzᵢ werden mit dem jeweils vorausgehenden Messwert Rzᵢ₋₁ verglichen. Es wird überprüft, ob ein mathematisch monotoner Kurvenverlauf vorliegt. Mit dieser Methode wird bereits die "Güte" der Signalerfassung kontrolliert und ein auf einer fehlerhaften Messung beruhender Fehler der Mess- und Auswerteeinrichtung erkannt.

Zur Prüfung auf fallende Monotonie wird ermittelt, ob der Zwischenmesswert Rzᵢ einen geringeren Wert hat als der unmittelbar vorausgehende Zwischenmesswert Rzᵢ₋₁. Ist dies nicht der Fall, so liegt ein Fehler in der Messeinheit 9 vor. Ein Fehlersignal wird ausgegeben. Wird überprüft, ob die Zwischenmesswerte Rzᵢ eine monoton steigende Funktion bilden, müssen die Zwischenmesswert Rzᵢ größer sein als die unmittelbar vorausgehenden Zwischenmesswerte Rzᵢ₋₁. Alternativ könnte auch der Betrag der Abweichung zwischen zwei aufeinander folgenden Zwischenmesswerten ermittelt werden. Dies reicht aus, wenn lediglich unakzeptable Abweichungen der Zwischenmesswerte, sogenannte Spikes, frühzeitig erkannt werden sollen.

Zur Bestimmung des Konzentrationswertes wird bevorzugt der Wert des Messsignals (Remissionswert), d.h. der Zwischenmesswert Rzᵢ, verwendet, der von dem vorausgehenden Zwischenmesswert Rzᵢ₋₁ weniger als ein vorbestimmter Grenzwert abweicht. Dieser Grenzwert ist auf einfache Weise parametrisierbar. Damit wird sichergestellt, dass der "richtige" Zwischenmesswert als aktueller Messwert des Messsignals für die Bestimmung des Konzentrationswertes verwendet wird. Dies ist dann der Fall, wenn die zeitliche Änderung des Messwertes (Remissionswert) vernachlässigbar ist.

Figur 3 stellt die Zuordnung zwischen den Werten des Messsignals R, also den Remissionsmesswerten, und den Konzentrationswerten C dar. Die Zuordnung kann in Form einer Tabelle oder einer Funktion bzw. einer Kurve abgelegt sein. Bevorzugt wird die Zuordnung des Auswertealgorithmus durch eine Spline-Funktion approximiert. Dabei hat sich eine Spline-Funktion mit höchstens zehn Stützstellen als geeignet erwiesen; bevorzugt wird eine Approximation durch eine Spline-Funktion mit höchstens fünf Stützstellen. Beispielsweise kann die Spline-Funktion durch eine Funktion dritten Grades gebildet sein. Die Parameter zur Beschreibung der Funktion dritten Grades sind jeweils von der Produktionscharge des verwendeten Testträgers 3 abhängig und werden jeweils vor der ersten Verwendung eines Testträgers einer neuen Produktionscharge dem Analysegerät eingespielt, wobei diese Informationen (Parameter) in den Speicher 17 des Analysegeräts 2 abgelegt werden. Bei einer Approximation der Zuordnung für eine Spline-Funktion dritten Grades an fünf Stützstellen müssen insgesamt 16 Parameter abgespeichert werden.

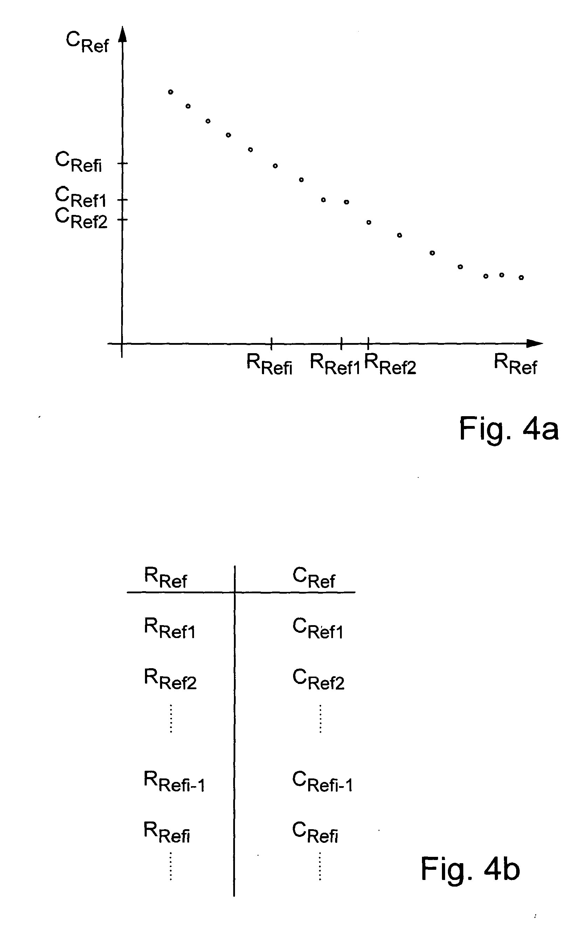

Vor der ersten Verwendung eines Testträgers 3 einer neuen Produktionscharge wird nach dem Einspielen der Information über die chargenspezifische Zuordnung eine Referenzzuordnung erstellt. Eine derartige Referenzzuordnung zwischen Referenzmesswert R_{Ref} (Referenzremissionswerten) und Referenzkonzentrationswerten C_{Ref} ist in Figur 4a dargestellt. Eine Mehrzahl von vorbestimmten Referenzmesswerten wird auf die Zuordnung des Auswertealgorithmus angewandt. Dadurch wird zu jedem Referenzmesswert R_{Refi} ein Referenzkonzentrationswert C_{Refi} erstellt. Vorzugsweise wird die Referenzzuordnung für wenigstens dreißig, besonders bevorzugt für wenigstens fünfzig Referenzmesswerte gebildet. Die Referenzzuordnung zwischen Referenzmesswerten R_{Ref} und Referenzkonzentrationswerten C_{Ref} kann auch, wie in Figur 4b gezeigt, in Form einer "Look-Up-Tabelle" abgelegt werden.

Zur Überprüfung eines während der Bestimmung eines Analyten ermittelten Konzentrationswertes wird der zu dem aktuellen Messwert des Messsignals benachbarte Referenzmesswert R_{Refi} ermittelt und der Referenzkonzentrationswert C_{Refi} der Referenzzuordnung bestimmt. Dieser ausgewählte Referenzkonzentrationswert wird mit dem ermittelten Konzentrationswert verglichen.

Alternativ oder optional wird ein erster und ein zweiter Referenzkonzentrationswert C_{Ref1},C_{Ref2} aus einem ersten und einem zweiten Referenzmesswert R_{Ref1},R_{Ref2} ermittelt. Als erster und der zweiter Referenzmesswert R_{Ref1},R_{Ref2} werden die Werte ausgewählt, die dem aktuellen Messwert des Messsignals jeweils benachbart sind. Die Bestimmung der beiden Referenzkonzentrationswerte C_{Ref1},C_{Ref2} geschieht mittels der Referenzzuordnung. Der ermittelte Konzentrationswert wird dann mittels des Kontrollalgorithmus mit dem ersten und dem zweiten Referenzkonzentrationswert C_{Ref1}, C_{Ref2} überprüft. Bevorzugt muss der gemessene Konzentrationswert zwischen dem ersten und dem zweiten Referenzkonzentrationswert C_{Ref1},C_{Ref2} liegen.

Ein Fehler der Mess- und Auswerteeinrichtung 8 wird dann erkannt, wenn der ermittelte Konzentrationswert nicht zwischen dem ersten und dem zweiten Referenzkonzentrationswert C_{Ref1},C_{Ref2} liegt, wenn also der ermittelte Konzentrationswert größer als der erste Referenzkonzentrationswert C_{Ref1} und kleiner als der zweite Referenzkonzentrationswert C_{Ref2} ist.

Alternativ kann aus der Differenz des ersten und zweiten Referenzkonzentrationswerts C_{Ref1},C_{Ref2} auch der Grenzwert bestimmt werden, der zur Überprüfung der Abweichung des Konzentrationswertes von nur einem Referenzkonzentrationswert zugrundegelegt wird.

## Patentansprüche

1. Analysesystem zur photometrischen Bestimmung eines Analyten in einer Körperflüssigkeit mit einem Analysegerät (2) und einem Testträger (3), wobei der Testträger (3) eine Auswertezone (4) aufweist, in der als Folge einer Reaktion einer mit dem Testträger (3) kontaktierten Probe der Körperflüssigkeit mit einem in dem Testträger (3) enthaltenen Reagenz eine photometrisch nachweisbare Änderung stattfindet, und wobei das Analysegerät (2) umfasst:
einen optischen Sender (5) zur Emission von Licht auf die Auswertezone (4) des Testträgers (3);
einen optischen Empfänger (7) zum Empfang von Licht von der Auswertezone (4) und zum Erzeugen eines dem empfangenen Licht entsprechenden Messsignals;
eine Mess- und Auswerteeinrichtung (8) mit einer Messeinheit (9) und einer Auswerteeinheit (10), wobei
in der Messeinheit (9) das von dem Empfänger erzeugte Messsignal verstärkt und digitalisiert wird und
in der Auswerteeinheit (10) aus dem digitalisierten Messsignal der gesuchte Konzentrationswert mittels eines Auswertealgorithmus, der eine Zuordnung zwischen Werten des Messsignals und Konzentrationswerten umfasst, ermittelt wird, wobei in dem Auswertealgorithmus mindestens ein Rechenschritt mittels eines Prozessors ausgeführt wird,
in der Auswerteeinheit (10) an einem Erfassungspunkt im Verarbeitungsablauf hinter der Ausführung des Rechenschrittes ein Kontrollwert einer Kontrollgröße erfasst wird,
der Kontrollwert mittels eines Kontrollalgorithmus überprüft wird, in dem eine Abweichung des ermittelten Kontrollwerts von einem Erwartungswert bestimmt wird und
ein Fehler der Mess- und Auswerteeinrichtung (8) erkannt wird, wenn die Abweichung des Kontrollwertes von dem Erwartungswert einen vordefinierten Grenzwert übersteigt.

2. Analysesystem nach Anspruch 1, **dadurch gekennzeichnet, dass** der Kontrollwert der gesuchte Konzentrationswert ist und dass der Erwartungswert ein Referenzkonzentrationswert ist.

3. Analysesystem nach Anspruch 1 oder 2, **dadurch gekennzeichnet, dass** die Zuordnung zwischen Werten des digitalisierten Messsignals und Konzentrationswerten chargenspezifisch ist und das Analysegerät (2) einen Speicher (17) aufweist, in den Informationen über die chargenspezifische Zuordnung eingespielt werden bevor ein Auswertealgorithmus für einen Testträger (3) einer neuen Produktionscharge ausgeführt wird, und im Zusammenhang mit dem Einspielen der Informationen über einen neuen chargenspezifischen Auswertealgorithmus und vor dessen erster Verwendung für einen Testträger einer neuen Produktionscharge eine Referenzzuordnung, die in dem Kontrollalgorithmus verwendet wird, abgespeichert wird, durch die einer Mehrzahl von Referenzmesswerten eine Mehrzahl von Erwartungswerten zugeordnet wird.

4. Analysesystem nach Anspruch 3, **dadurch gekennzeichnet, dass** der Erwartungswert mittels der Referenzzuordnung aus einem Referenzmesswert ermittelt wird, der dem aktuellen Messwert des Messsignals benachbart ist.

5. Analysesystem nach Anspruch 3 oder 4, **dadurch gekennzeichnet, dass** mittels der Referenzzuordnung aus einem ersten und zweiten Referenzmesswert (R_{Ref1},R_{Ref2}), die dem aktuellen Messwert des Messsignals benachbart sind, ein erster und ein zweiter Erwartungswert (E_{Ref1},E_{Ref2}) ermittelt werden und dass der Kontrollwert mit dem ersten und dem zweiten Erwartungswert (E_{Ref1},E_{Ref2}) mittels des Kontrollalgorithmus überprüft wird.

6. Analysesystem nach Anspruch 5, **dadurch gekennzeichnet, dass** ein Fehler der Mess- und Auswerteeinrichtung (8) erkannt wird, wenn der Kontrollwert größer als der erste Erwartungswert (E_{Ref1}) und kleiner als der zweite Erwartungswert (E_{Ref2}) ist.

7. Analysesystem nach einem der vorhergehenden Ansprüchen, **dadurch gekennzeichnet, dass** die Referenzzuordnung mittels des Auswertealgorithmus mit vorbestimmten Referenzmesswerten erzeugt wird.

8. Analysesystem nach einem der Ansprüche 3 bis 7, **dadurch gekennzeichnet, dass** die Erwartungswerte der Referenzzuordnung des Kontrollalgorithmus auf mathematische Monotonie überprüft werden.

9. Analysesystem nach einem der vorhergehenden Ansprüche, **dadurch gekennzeichnet, dass** die Zuordnung des Auswertealgorithmus durch eine Spline-Funktion mit höchstens zehn Stützstellen, bevorzugt mit höchstens fünf Stützstellen approximiert wird.

10. Analysesystem, insbesondere nach einem der vorhergehenden Ansprüche, zur photometrischen Bestimmung eines Analyten in einer Körperflüssigkeit mit einem Analysegerät (2) und einem Testträger (3), wobei der Testträger (3) eine Auswertezone (4) aufweist, in der als Folge einer Reaktion einer mit dem Testträger (3) kontaktierten Probe der Körperflüssigkeit mit einer in dem Testträger (3) enthaltenen Reagenz eine photometrisch nachweisbare Änderung stattfindet, und wobei das Analysegerät (2) umfasst:
einen optischen Sender (5) zur Emission von Licht auf die Auswertezone (4) des Testträgers (3);
einen optischen Empfänger (7) zum Empfang von Licht von der Auswertezone (4) und zum Erzeugen eines dem empfangenen Licht entsprechenden Messsignals;
eine Mess- und Auswerteeinrichtung (8) mit einer Messeinheit (9) und einer Auswerteeinheit (10), wobei
in der Messeinheit (9) das von dem Empfänger erzeugte Messsignal verstärkt und digitalisiert wird und
in der Auswerteeinheit (10) aus dem digitalisierten Messsignal der gesuchte Konzentrationswert mittels eines Auswertealgorithmus, der eine Zuordnung zwischen Messwerten des Messsignals und Konzentrationswerten umfasst, ermittelt wird,
in der Messeinheit (9) zu einer Mehrzahl von Messzeitpunkten (T₁, T₂ ...) eine Mehrzahl von aufeinanderfolgenden Hilfsmesswerten (R_{z1}, R_{z2...}) des Messsignals ermittelt werden und
in der Mess- und Auswerteeinrichtung (8) die aufeinander folgenden Hilfsmesswerte (R_{Z1}, R_{Z2 ...}) mit den jeweils vorausgehenden Hilfsmesswerten (R_{Z1}, R_{Z2...}) verglichen werden, um zu überprüfen, ob die Hilfsmesswerte (R_{Z1}, R_{Z2...}) eine mathematisch monotone Funktion bilden, und
ein Fehler der Mess- und Auswerteeinrichtung (8) erkannt wird, wenn dies nicht der Fall ist.

11. Analysesystem nach Anspruch 10, **dadurch gekennzeichnet, dass** bei der Überprüfung der Hilfsmesswerte (R_{Z1}, R_{Z2}...) ermittelt wird, ob jeder der Hilfsmesswerte (R_{z1}, R_{z2} ...) einen geringeren Wert hat als der unmittelbar vorausgehende Hilfsmesswert (R_{Z1}, R_{Z2} ...) und, wenn dies nicht der Fall ist, ein Fehler erkannt wird.

12. Analysesystem nach Anspruch 10, **dadurch gekennzeichnet, dass** bei der Überprüfung der Hilfsmesswerte (R_{Z1}, R_{Z2} ...) ermittelt wird, ob jeder der Hilfsmesswerte (R_{Z1}, R_{Z2...}) einen höheren Wert hat als der unmittelbar vorausgehende Hilfsmesswert (R_{Z1}, R_{Z2} ...) und, wenn dies nicht der Fall ist, ein Fehler erkannt wird.

13. Analysesystem nach einem der Ansprüche 10 bis 12, **dadurch gekennzeichnet, dass** der Hilfsmesswert (R_{Z1}, R_{Z2} ...), der von dem vorausgehenden Hilfsmesswert (R_{Z1}, R_{Z2}...) weniger als ein vorbestimmter Wert abweicht, als aktueller Messwert des Messsignals zur Bestimmung des Kontrollwertes verwendet wird.
